# EUROPEAN PATENT APPLICATION

(11) **EP 1 347 399 A1**
(43) Date of publication of application: **24.09.2003**
(21) Application number: 03003246.0
(22) Date of filing: 21.02.2003
(51) Int. Cl.: G06F 17/60

(54) **Travel insurance reception apparatus and method**

(30) Priority: 19.03.2002 JP 2002076914
(71) Applicant: Kabushikikaisha Equos Research, Tokyo 101-0021 (JP); AISIN AW CO., LTD., Anjo-shi, Aichi-ken 444-1192 (JP)
(72) Inventor: Kato, Atsushi, c/o Aisin AW Co., Ltd., Anjo-shi, 444-1192 (JP); Kawamoto, Kiyoshi, c/o K.K. Equos Research, Tokyo 101-0021 (JP); Kimura, Keiichi, Chiyoda-ku, Tokyo 101-0021 (JP)
(74) Representative: VOSSIUS & PARTNER

(57) **Abstract**

The present invention is to provide a travel insurance reception apparatus and method, which provide to a user an insurance product suitable for his or her travel plan in a convenient manner and to contract for the insurance product. A travel insurance reception apparatus 20: receives, by an insurance order receiving program 22a, data for destination and starting point from a navigation device 70; transmits, by a proposed insurance select program 22c, one or more insurance products, based on the destination and the starting point, to the navigation device 70 via a communication device 25; and receives, by a contract confirmation program 22e; receives contract agreement on the insurance product from the navigation device 70 as acceptance/rejection information by receiving data via the communication device 25. This allows the user to receive a proposal of the insurance product suitable for his or her itinerary via the navigation device 70, as well as to contract the proposed insurance product by the travel insurance reception apparatus 20 in a convenient manner.

## Description

The present invention relates to a travel insurance reception apparatus comprising a communication device which transmits/receives data to/from an external device, and method for a travel insurance reception.

Conventionally, travel insurance is what a user selects, after planning his or her travel, by comparing his or her itinerary with insurance types proposed by an insurance company. In comparison thereof, it is commonly observed that the user explains his or her itinerary in detail to an agency attendant over the counter of a tourist agency and consults with the attendant to determine the insurance.

Recently, prevalence of the Internet has enabled to design a travel plan by searching, on the Internet, selection of a destination, a scenic site that attracts the user to drop by, and the like when creating the itinerary. In addition, obtention of data on accommodations, adoption of a travel route, and the like can also be performed through the Internet.

Although itinerary planning has been made possible through the Internet, adoption of the travel insurance that suits the planned itinerary has to be separately consulted with the tourist agency, which is not by any means convenient for the user.

Further, there is no apparatus or method, in the prior art, for proposing a travel insurance product suitable for detailed travel plan when the user creates the itinerary which includes a destination and/or a traveling route. This is because it is troublesome to inform the attendant of the tourist agency of the detailed travel plan, and it is also troublesome for the user himself or herself to formulate a travel insurance plan based on his or her detailed travel plan.

The present invention aims to solve the above-described problems and an object thereof is to provide a travel insurance reception apparatus and method, which propose to a user an insurance product suitable for user's travel plan and also to make a contract for with of the user in a convenient manner and also to achieve conclusion of its contract in a convenient manner.

In order to attain the above object, a travel insurance reception apparatus according to claim 1 is technically characterized in that the travel insurance reception apparatus including a communication device which transmits/receives data to/from an external device, comprises: a travel information receiving means for receiving data on destination and starting point from the external device via the communication device; an insurance product proposing means for transmitting one or more insurance products based on the destination and the starting point which have been received by the travel information receiving means to the external device via the communication device; and an accept/reject data receiving means for receiving data on accepting or rejecting the insurance products transmitted by the insurance product proposing means.

Here, insurance products based on destination and starting point represent such insurance that an insurance premium is set with reference to geographical and spatial conditions and climate conditions relating to the destination and the starting point, this insurance including: insurance in which the insurance premium is determined depending, for example, on a mileage from the starting point to the destination (that is, the longer the travel mileage is, the higher the probability of the accident becomes, so that a high insurance premium is set); insurance having variety of settings of the insurance premium with reference to route conditions (width of road, distinction between paved/unpaved roads, the number of intersections on the route, the number of crossings on the route, and the like), the route is estimated to be drive on from the starting point to the destination; insurance having variety of settings of the insurance premium with reference to weather and a weather forecast at that time (in a case when the route includes a predicted course of a typhoon, in a case when a forecast predicts rain/snow/fog or the like in an area of the route, in a case when a high probability of the road becoming icy is expected due to low temperature, or the like); and the like.

In the invention according to claim 1: data of the destination and the starting point are received by the travel information receiving means from an external device; one or more insurance products, based on the destination and the starting point, are transmitted to the external device via the communication device by the insurance product proposing means; and acceptance/rejection on the transmitted insurance product is received, by the accept/reject data receiving means. This allows the user, only inputting the destination and starting point via the external device, to receive proposal of the insurance product suitable for his or her itinerary and to make a contract for the proposed insurance product via the external device without visiting tourist agency as in the case of a conventional art. Therefore, the travel insurance apparatus has an advantage that it conveniently proposes to the user the insurance product suitable for the itinerary and makes a contract for the proposed insurance product in a convenient manner.

In order to attain the above object, the travel insurance reception apparatus according to claim 4 is technically characterized in that the travel insurance reception apparatus including a communication device which transmits/receives data to/from an external device, comprises: a travel information receiving means for receiving data on destination and starting point from the external device via the communication device; an insurance product select means for selecting one or more insurance products, based on a prescribed condition, when a mileage from the starting point to the destination exceeds a predetermined value; an insurance product proposing means for transmitting to the external device via the communication device first contents regarding the selected insurance products; an accept/reject data receiving means for receiving data on accepting/rejecting one of the insurance products represented by the first contents transmitted by the insurance product proposing means; and an approved contract notifying means for, when the accept/reject data receiving means have received the data on accepting one of the insurance products, notifying approval of a contract of the accepted insurance product and transmitting second contents regarding the accepted insurance product to the external device via the communication device.

In the invention according to claim 4: the data of the destination and the starting point are received from the external device by the travel information receiving means; one or more insurance products are selected, by the insurance product select means, based on the prescribed conditions when the mileage between the destination and the starting point exceeds the predetermined value; the first contents regarding the selected insurance products are transmitted to the external device via the communication device by the insurance product proposing means; data on acceptance/rejection on the transmitted insurance product is received by the accept/reject data receiving means; and, when the accept/reject data receiving means have received the data on accepting one of the insurance products, the second contents on the accepted insurance product are transmitted to the external device by the approved contract notifying means via the communication device, so as to notify approval of the contract relating to the insurance product. This allows the user to be proposed insurance products suitable for his or her itinerary only if a mileage of the itinerary exceeds prescribed value. Therefore, the travel insurance reception apparatus have an advantage that it can propose travel insurance to a user only if the user plans long mileage travel that is considered to need a travel insurance. It means that the apparatus can make the user free from bothering by being proposed travel insurance every time the user plans a travel.

The travel insurance reception apparatus according to claim 2 is technically
characterized in that the travel information receiving means in claim 1 receives data on a current position of the external device.

In the invention according to claim 2, the travel information receiving means receives data on a current position of the external device. Thereby, for example, even if either the destination or the starting point cannot be obtained, non-obtainable information is complemented based on the current position and the insurance product can be selected the insurance product select means. Therefore, the travel insurance reception apparatus has the advantage as to further conveniently propose to the user the insurance product suitable for the travel plan and to make a contract for the proposed travel insurance in a convenient manner.

Further, the travel insurance reception apparatus according to claim 3 is technically characterized in that the starting point in claim 1 is the current position of the external device.

In the invention according to claim 3, the starting point is a current position of the external device. Thereby, even if the starting point cannot be obtained, the received current position data is replaced with the starting point data to select the insurance product by the insurance product select means. Therefore, the travel insurance reception apparatus has the advantage as to further conveniently propose to the user the insurance product suitable for the travel plan without inputted the starting point by the user.

Further, the travel insurance reception apparatus according to claim 7 is technically characterized in that the prescribed condition in claim 4 is the mileage between the destination and the starting point, or a condition with reference to the destination.

In the invention according to claim 7, the prescribed condition is the mileage between the destination and the starting point, or the condition with reference to the destination. Thereby, when the prescribed condition is the mileage between the destination and the starting point, the most suitable insurance product can be selected with reference to the mileage, while when the prescribed condition is the condition with reference to the destination, the most suitable insurance product can be selected with reference to the destination. Therefore, the travel insurance reception apparatus has the advantage as to conveniently propose to the user the insurance product furthermore more suitable for the user's travel plan.

Further, the travel insurance reception apparatus according to claim 8 is technically characterized in that the first contents regarding the insurance product in claim 4 are a brief summary thereof and the second contents regarding the insurance product are detailed particulars thereof.

Here, "a brief summary of the insurance product" represents contents of the travel insurance and an insurance amount corresponding thereto and its insurance premium, while "detailed particulars of the insurance product" include the contents of the travel insurance, the insurance amount corresponding thereto and its insurance premium, and a covenant regarding the insurance contract.

In the invention according to claim 8, since the first contents regarding the insurance product are a brief summary thereof and the second contents regarding the insurance product are detailed particulars thereof, the first contents can be made less in data volume than the second contents. This enables to suppress the data volume of the first contents transmitted by the insurance product proposing means, so that the time and the cost of communication required for the data transmission can be reduced. Therefore, the travel insurance reception apparatus has the advantage as to conveniently propose, in a fast and inexpensive manner, to the user the insurance product suitable for the travel contents and to make a contract.

Further, the travel insurance reception apparatus according to claim 9 is technically characterized in that the travel insurance reception apparatus in claim 4 further comprises an insurance premium collecting means for, when the accept/reject data receiving means receives the data on accepting one of the transmitted insurance products, collecting an insurance premium of the accepted insurance product from a user of the external device who accepts the one of the insurance products.

In the invention according to claim 9, the insurance premium of the insurance product is collected from the user of the external device who selects the insurance product by the insurance collecting means. This enables to collect the insurance premium via the external device, so that an insurance premium payment procedure can be simplified. Therefore, the travel insurance reception apparatus has the advantage as to conveniently collect the premium of accepted insurance product.

In addition, the travel insurance reception apparatus according to claim 10 is technically characterized in that the external device in claim 4 is a navigation device mounted on a vehicle.

In the invention according to claim 10, the external device is the navigation device mounted on a vehicle. Thereby, the destination and the current position, which are inputted in connection with route guide operation in the navigation device, are utilized to handle a process by the travel information receiving means and other processes. Therefore, when traveling with a vehicle equipped with the navigation device, it is effective to receive proposal of the insurance product suitable for the travel plan in a convenient manner, based on the inputted information for route guidance.

Further, the travel insurance reception apparatus according to claim 9 is technically characterized in that the external device is a personal digital assistant.

In the invention according to claim 11, the external device is a personal digital assistant. Thereby, the user of the personal digital assistant can receive proposal of the insurance product suitable for the travel plan anytime and anywhere, and make a contract for proposed insurance product.

In order to attain the above object, a travel insurance reception apparatus according to claim 12 is technically characterized in that the travel insurance reception apparatus including a communication device which transmits/receives data to/from an external device, comprises: a travel information receiving means for receiving data on destination from the external device via the communication device; and an insurance product proposing means for transmitting one or more insurance products to the external device via the communication device based on the destination.

In the invention according to claim 12: only the data of the destination are received by the travel information receiving means from an external device; and one or more insurance products, based on the destination, are transmitted to the external device via a communication device by the insurance product proposing means. This allows the user to only input the destination to the external device, so as to receive a proposal of the insurance product suitable for his or her itinerary via the external device without traveling to a tourist agency or the like as in the case of a conventional art. Therefore, the travel insurance reception apparatus has the advantage as to conveniently propose to the user the insurance product suitable for the travel contents where the user just only inputs the destination.

Further a travel insurance reception apparatus according to claim 13 is technically characterized in that the insurance product is determined with reference to category of the destination.

In order to attain the above object, a computer-implemented method for travel insurance reception according to claim 14 is technically characterized in that the method comprises the steps of: electrically receiving data on destination from the external device; selecting one or more insurance products with reference to category of the destination; and electrically transmitting the selected insurance products to the external device.

In the invention according claim 14, a general-purpose computer like a WWW server and the like can use for a travel insurance reception service.
FIG. 1 is a block diagram showing a structure of a travel insurance reception apparatus according to a first embodiment of the invention;
FIG. 2 is a flow chart showing a flow of a travel insurance reception process handled by a travel insurance receiving program executed by the travel insurance reception apparatus according to the first embodiment;
FIG. 3(A) and FIG. 3(B) are examples of a screen display showing one example of an insurance plan proposed by the travel insurance reception apparatus according to the first embodiment, FIG. 3(A) being transmitted in a step S109 shown in FIG. 2, while FIG. 3(B) being transmitted in a step S115 shown in FIG. 2;
FIG. 4 is a block diagram showing a structure of a travel insurance reception apparatus according to a second embodiment of the invention;
FIG. 5 is a flow chart showing a flow of a travel insurance reception process handled by a travel insurance receiving program executed by the travel insurance reception apparatus according to the second embodiment;
FIG. 6 is an explanatory diagram showing an example of insurance premium database of the travel insurance reception apparatus according to the second embodiment, and
FIG. 7 is an explanatory diagram showing a display example of a display screen outputted by steps S209 and S211 shown in FIG. 5.

Hereinafter, embodiments of a travel insurance reception apparatus and method of the present invention are described with reference to the drawings.

### -First Embodiment-

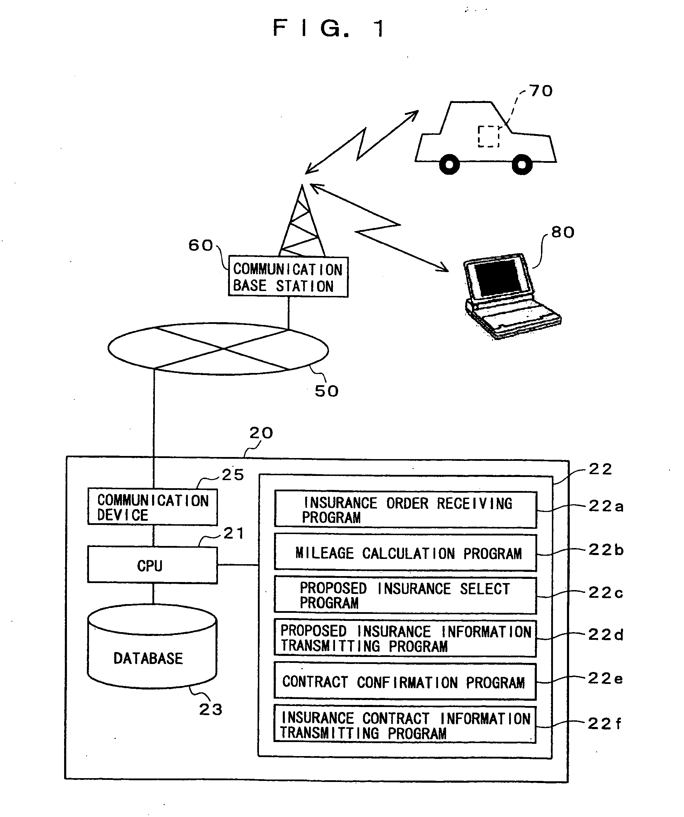

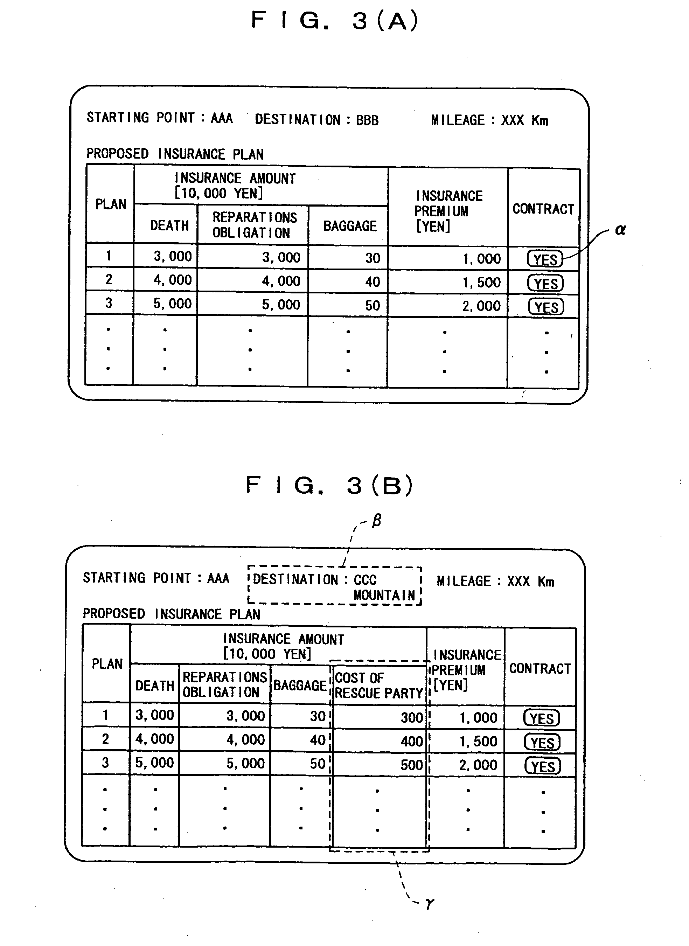

First, such an example is described based on FIG. 1 to FIG. 3(A) and FIG. 3(B) as a first embodiment that a travel insurance reception apparatus and method of the present invention are applied to a travel insurance reception apparatus 20 being connected to the Internet.

As shown in FIG. 1, the travel insurance reception apparatus 20 according to the first embodiment has a function as a WWW (World Wide Web) server mainly comprising a CPU 21, a memory 22, database 23, a communication device 25, and the like. This travel insurance reception apparatus 20 is to propose to a user an insurance product suitable for the travel plan of the user in a convenient manner and also to make a contract for, when the user accesses a home page provided by the travel insurance reception apparatus 20, via an open communications network such as the Internet 50 that is open to general public, from a navigation device 70 or a portable terminal device (PDA (Personal Digital, Assistant) or the like) 80.

Note that the "home page" is to disclose WWW contents stored in the WWW server and it represents an information system built on the Internet which discloses contents described in HTML (Hypertext Markup Language) and the like.

The CPU 21, being a central processing unit for controlling the travel insurance reception apparatus 20, is connected to the memory 22, the database 23, the communication device 25, and the like. The memory 22 stores various control programs 22a, 22b, 22c, 22d, 22e, 22f, and the like to be hereinafter mentioned, besides a system program for controlling the CPU 21, wherein the CPU 21 reads out these programs from the memory 22 to sequentially execute them.

The memory 22 is a memory device connected to a system bus, composing main memory space used by the CPU 21. The memory 22 has various programs such as: an insurance order receiving program 22a; a mileage calculation program 22b; a proposed insurance select program 22c; a proposed insurance information transmitting program 22d; a contract confirmation program 22e; an insurance contract information transmitting program 22f; system and application program for providing the home page; and the like being previously stored therein.

The database 23, which may be a nonvolatile memory composing an auxiliary memory space used by the CPU 21, a hard disk, a compact disk, a DVD (Digital Versatile Disc), or the like, is connected to the CPU 21 via the system bus, and it mainly stores data on map information and insurance products. For example, this database 23 stores: coordinates information comprising, for example, longitude and latitude for various locations and roads that is required to calculate a mileage between a destination and a starting point; insurance product information selected with reference to a prescribed condition such as the mileage or destination categories; and the like.

The communication device 25 is communication equipment for transmitting/receiving data, through radio communication network, to/from the navigation device 70 or the portable terminal device 80 via a communication base station 60 that is connected to the Internet 50, and it is connected to the CPU 21 via an input/output interface or the system bus that is not shown. For example, the communication device 25 is to be connected to the Internet 50 by utilizing a cable communication system with the use of a metallic cable or an optical fiber cable and a radio communication system such as a cellular phone or a PHS.

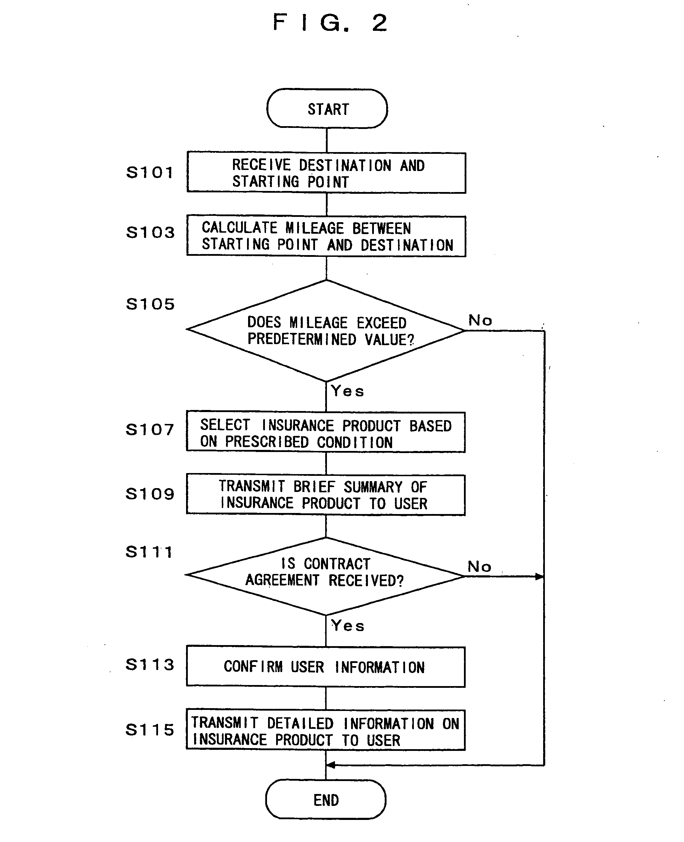

The thus-structured travel insurance reception apparatus 20 executes the travel insurance receiving program to implement a travel insurance reception process (method), and its process flow is hereinafter described based on FIG. 2. This travel insurance reception process is executed by the aforementioned insurance order receiving program 22a, the mileage calculation program 22b, the proposed insurance select program 22c, the proposed insurance information transmitting program 22d, the contract confirmation program 22e, and the insurance contract information transmitting program 22f.

As shown in FIG. 2, first, a process to receive a destination and a starting point is executed in a step S101 after a predetermined initialization process. This process is executed by the insurance order receiving program 22a stored in the memory 22, in which the data of destination and starting point, are obtained via the communication base station 60, the Internet 50, and the communication device 25, the data of the destination and the starting point being included in a demand packet of the travel insurance reception process transmitted from, for example, the navigation device 70. Here, an IP address identifying the navigation device 70 of a user who makes access thereto is obtained as well.

When the navigation device 70 is equipped with a GPS, a current position, detected thereby, of the navigation device 70 itself may be used as a starting point to be transmitted to the step S101. Thereby, when the starting point corresponds to the current position, replacing the data of the current position with the data of the starting point allows to omit user's input operation of the starting point, which results in simplifying the operation.

As described later, it is preferable to incorporate further service process relating the contracted travel insurance ( such as dispatch of road services to the current position of the navigation device 70 in the case of trouble or accident). These additional services for the user can increase in customer satisfaction measurement.

A step S103 handles a process to calculate the mileage between the starting point and the destination. This process is executed by the mileage calculation program 22b stored in the memory 22 based on the data of the destination and starting point received in the step S101. For example, the mileage is able to derive by retrieving data of longitude/latitude value correspond to the destination and starting point from the database 23 and calculating the distance between those longitude/latitude value.

The following step S105 handles a judgment process whether or not the mileage derived in the step S103 exceeds a predetermined value. This process is also handled by the mileage calculation program 22b that executes the process in the step S103. In this process, the predetermined value is set to, for example, 50 km, so that only when the mileage between the destination and the starting point is 50 km or more, a travel insurance product is proposed by processes S107 and below. Thereby, in the case of a short distance trip that is supposed to unnecessary to have travel insurance (for example, the mileage is below 50 km), the travel insurance reception process is terminated without particularly proposing such travel insurance product. Specifically in this embodiment, when the mileage between the destination and the starting point can be judged as 50 km or more (Yes in S105), the following step S107 is executed, otherwise (No in S105) a series of the travel insurance reception processes are terminated.

Note that when the mileage between the starting point and the destination is judged, in the step S105, below the predetermined value (for example, in the case of the short distance trip as previously described), such a process as to "advise the user on not recommending the insurance product" may be handled after branching out into No at the step S105. This enables to inform the user that a travel insurance is not needed for the short distance trip considering cost effectiveness. Such processes may also be handled after branching out into No at the step S105: as to "confirm whether the user requires the travel/insurance contract or not"; and, responding to this confirmation process, as to "transfer the process to the step S107 when a request for the travel insurance contract is received from the user". As a result, even if the mileage between the starting point and the destination is judged below the predetermined value, confirmation is made on the user whether to request the travel insurance contract or not, which enables to suit the needs of the users who desire to contract a travel insurance even under such a case.

A step S107 handles a process to select the insurance product to be proposed to the user based on the prescribed conditions. This process is to retrieve, by the proposed insurance select program 22c, insurance product information prepackaged and prepared in the database 23, to thereby select the insurance product that corresponds with the prescribed conditions. The prescribed conditions include, for example, a mileage-related condition calculated in the step S103 and a destination-related condition. Under the mileage-related condition, for example, an insurance premium increases or decreases in proportion to the mileage, so that such an insurance product is selected that the shorter the mileage is, the lower the insurance premium becomes, while the longer the mileage is, the higher the insurance premium becomes. On the other hand, under the destination-related condition, for example, the insurance premium increases or decreases, with reference to destination categories, in proportion to a factor of risk for each destination, so that such an insurance product is selected as to have a low insurance premium when the destination is a theme park or an amusement park whose factor of risk is low, while having a high insurance premium when the destination is a ski resort, a climbable mountain, seashore, a swimming beach, or the like whose factor of risk is higher. The information of categories related with destination is also stored in the database 23.

The step S107 includes a process to "select" the insurance product proposing with reference to the prescribed conditions, however, it is preferable that this step may include a process to "generate" the insurance product proposing with reference to the prescribed conditions as a substitute for the process to "select" the prepackaged insurance product. This means that, for example, the step S107 may include a process for generating the insurance product, which is to be proposed to the user, based on appropriate algorithm (for example, algorithm by which the insurance premium is calculated in proportion to the travel mileage) that can compute the insurance premium by inputting the mileage. This makes it unnecessary to previously store in the database 23 various sorts of insurance product information that differ in the insurance premium with respect to each mileage, which contributes to have capacity of the database 23 small and to propose various insurance product flexibly.

A step S109 handles a process to transmit to the user a brief summary on the insurance product that has been selected in the step S107. This process is handled by the proposed insurance information transmitting program 22d stored in the memory 22, in which the brief summary is transmitted to the navigation device 70 employing IP address of the navigation device 70 through the Internet 50.

The brief summary (first contents) on the insurance product in the step S109 represents contents of the travel insurance and an insurance amount corresponding thereto and its insurance premium, which are, for example, shown in FIG. 3(A) (FIG. 3(A) and FIG. 3(B) are examples showing the brief summary of the insurance product to be proposed to the navigation device or a screen of a personal digital assistant of the user). This example shows a case when the prescribed condition of the insurance product selected in the step S107 is based on "mileage", in which, for example, three kinds of insurance plans 1 to 3 are proposed as the insurance product on condition that the mileage is XXX km. The insurance plans 1 to 3 have "death", "reparations obligation", and "baggage" cited as the insurance contents, in which the insurance plans 1 to 3 are proposed in a sequential order from what has low insurance amount. Note that selecting or designating a contract button α shown in the drawing with a mouse or the like causes to transmit such notice to the travel insurance reception apparatus 20 that the user consents to (accepts) the insurance product contract.

FIG. 3(B) shows an example of a case when the prescribed condition of the insurance product selected in the step S107 is based on "destination-related condition (category of the destination, in this embodiment)". For example, when a destination (indicated by symbol β in Fig. 3(B)) that has been received turns out to be a climbable mountain ( CCC mountain shown in the drawing) by referring to the database 23, insurance for the cost of a rescue party required when the user has an accident during climbing the mountain, is added. In the example of FIG. 3(B), when the destination is the CCC mountain as shown with a symbol β, insurance proposal for the cost of the rescue party is added in a dashed frame part shown with a symbol γ in the drawing. Besides this example, proposed are hole-in-one insurance when the destination is a golf course, and so-called sport insurance in which a greater amount of insurance for injury and the like is set when the destination is a ski resort or a swimming beach.

A step S111 handles a confirmation process whether to receive the contract agreement (acceptance/rejection) from the user or not. This process is handled by the contract confirmation program 22e via the communication device 25, in which whether the insurance contract reaches consent or not is confirmed based on the contents of a packet (acceptance/rejection information) responding to the proposed insurance product, the response packet being transmitted from, for example, the navigation device 70 of the user. Then, when the contract can be confirmed to reach consent (Yes in the S111), the process of the following step S113 is executed, otherwise a series of the travel insurance reception processes are terminated since no approval of the insurance contract can be seen.

When receiving the insurance approval notice from the user in the step S111, the following step S113 handles a process to confirm user information. This process is also handled by the contract confirmation program 22e, in which, for example, the identity of the user is confirmed. The identity check is performed, for example, by verifying an ID number and a password registered before.

When the user's intention for making a contract is confirmed, the following step S115 handles a process to transmit detailed information (second contents) on the insurance product to which the user wish to make a contract. This process is handled by the insurance contract information transmitting program 22f via the communication device 25, in which detailed data including, for example, a covenant and the like regarding the insurance contract at the point of concluding the insurance contract is transmitted to the navigation device 70, employing the IP address that identifies the navigation device 70 of the user.

It is also acceptable to handle an insurance premium collecting process, in which the insurance premium of the contracted insurance product is collected from the user, together with transmission of the detailed information in the step S115. To be more precise, for example, it is structured as that a credit card number of the user as well as an ID number and a password thereof are registered in advance, so that the insurance premium is automatically withdrawn based on the credit card number. This allows the user to pay the insurance premium via the navigation device 70, so that an insurance premium payment procedure can be simplified. This makes it further convenient to propose to the user the insurance product suitable for the travel contents and to make a contract for the proposed insurance product.

As described above, the travel insurance reception apparatus 20: receives, by the insurance order receiving program 22a (S101), the data on destination and the starting point from the navigation device 70 or the portable terminal device 80; selects, by the proposed insurance product select program 22c (S107), one or more insurance products related with the destination; transmits, by the proposed insurance information transmitting program 22d (S109), the selected insurance products to the navigation device 70 or the like via the communication device 25; and receives, by the contract confirmation program 22e (S111, S113), the data on contract agreement (acceptance/rejection) on the insurance product from the navigation device 70 or the like by receiving the data via the communication device 25. This allows the user to input the destination and the starting point to the navigation device 70 or the like, so as to receive a proposal of the insurance product suitable for his or her itinerary via the navigation device 70 or the like, as well as to make a contract by the travel insurance reception apparatus 20, without traveling to a tourist agency or the like as in the case of a conventional art. Therefore, the travel insurance reception apparatus 20 has the advantage as to conveniently propose to the user the insurance product suitable for the travel contents and to make a contract.

The travel insurance reception apparatus 20: receives, by the insurance order receiving program 22a (S101), the data on the destination and the starting point from an external device; selects, by the mileage calculation program 22b (S103, S105) and the proposed insurance select program 22c (S107), one or more insurance products based on the prescribed conditions when the mileage between the destination and the starting point exceeds the predetermined value based on the destination and the starting point; transmits, by the proposed insurance information transmitting program 22d (S109), the brief summary on the insurance product to the navigation device 70 or the like via the communication device 25; receives, by the contract confirmation program 22e (S111), the contract agreement (acceptance/rejection) on the insurance product from the navigation device 70 or the like by receiving the data via the communication device 25; and transmits, by the insurance contract information transmitting program 22f (S115), detailed information regarding the insurance product to the navigation device 70 or the like via the communication device 25 when the contents of the data on acceptance/rejection prove the contract agreement (acceptance), so as to notify approval of the insurance product contract. This allows the user to input the destination and the starting point to the navigation device 70 or the like, so as to receive a proposal of the insurance product suitable for his or her itinerary via the navigation device 70 or the like, as well as to make a contract by the travel insurance reception apparatus 20, without traveling to a tourist agency or the like as in the case of a conventional art. Therefore, the travel insurance reception apparatus 20 has such effect as to conveniently propose to the user the insurance product suitable for the travel contents and to make a contract for the proposed insurance product.

The first embodiment is described on the assumption that the user accesses an insurance order receiving homepage in order to apply for the travel insurance. Besides this, it is also preferable to have such a structure with other Internet services, having no direct relation to the insurance, such as route searching service in which WWW server will search and show the appropriate route from the starting point to the destination which are inputted by the user. In such service, the travel insurance receiving program, which are shown in FIG. 2, are executed independently of user intention and the insurance product is proposed to the user.

Such a structure may be adopted that the travel insurance receiving program is executed to provide appropriate insurance product information for the user as an advertisement for the insurance product even if the user does not have explicit intention to apply for the insurance. This case includes the convenience that the user can be reminded the travel insurance as well as the travel planning since the appropriate insurance product for the user is presented even if the user has no attention of applying for the insurance. Specifically in the structure shown in FIG. 1, when the navigation device 70 equipped on a vehicle is a so-called network-type navigation device, in which a current position and a destination is transmitted to an external information center through a communication line, a route is searched in the information center, and the searched route data and map data are transmitted from the information center to the navigation device 70, the travel insurance receiving program according to this invention is executed in the information center so as to execute the processes handled by the travel insurance receiving program, which are shown in FIG. 2, based on the current position and the destination transmitted from'the navigation device.

Specifically, the navigation device 70 transmits, by a travel information transmitting means, the destination and the starting point to the information center via the communication base station 60 and the Internet 50. (Here, the travel information transmitting means represents, for example, a data transmitting program by which the destination and the starting point inputted by the user are transmitted to the information center through the communication line.) Then, the travel insurance reception program, implemented in the computer at the information center, is executed and transmits to the navigation device 70 a proposed insurance product that has been selected in the aforementioned step S107. The navigation device 70 receives the insurance product transmitted from the information center by the insurance product receiving means and presents it to the user. (Here, the insurance product receiving means represents, for example, a program by which insurance product data transmitted from the information center is received and displayed on a display of the navigation device.) The example of its presentation image is shown in FIG. 3(A) and FIG. 3(B). Here, for example, when the user desires to make a contract for the travel insurance, selecting or designating the contract button α shown in FIG. 3(A) with the mouse or the like causes the information to be transmitted to the information center by an accept/reject data transmitting means. Then the insurance contract is approved. (Here, the accept/reject data transmitting means represents, for example, a program that transmits to the information center a signal of the mouse or the like for accepting the insurance contract inputted by the user.) This navigation device 70 allows the user to receive a proposal for the travel insurance product and to make a contract in a vehicle.

### -Second Embodiment-

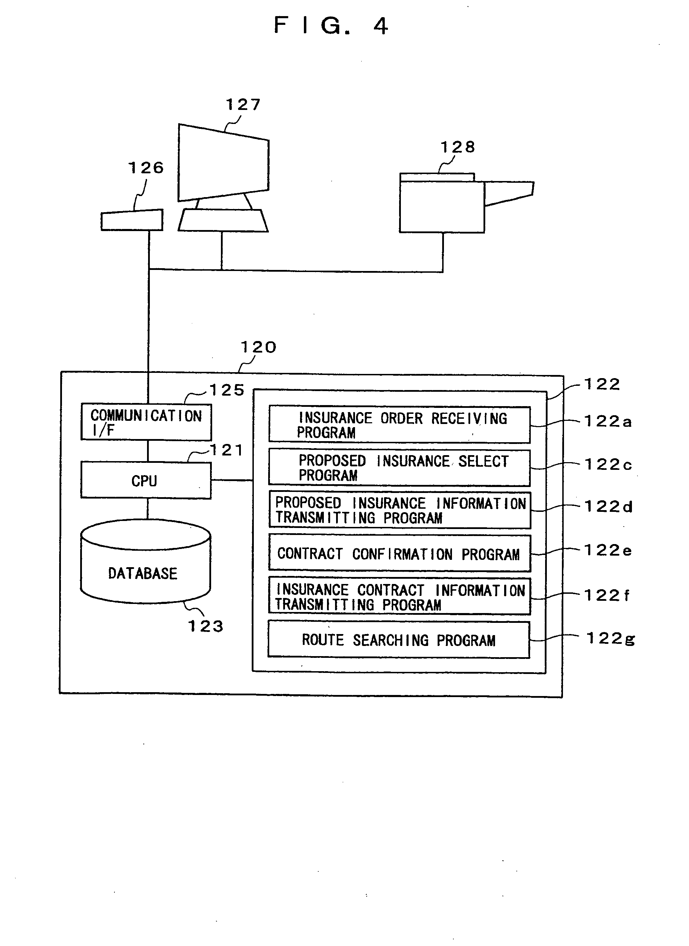

Next, a second embodiment is described based on FIG. 4 to FIG. 7 that a travel insurance reception apparatus and method of this invention are applied to a stand-alone travel insurance reception apparatus 120.

As shown in FIG. 4, the travel insurance reception apparatus 120 according to the second embodiment mainly comprises a CPU 121, a memory 122, database 123, a communication interface 125, and the like. This travel insurance reception apparatus 120, be supposed to install in a rental car shop, provides such service as to search a route from a current position (location of the rental car shop or user inputted starting point) to a destination when the travel destination is inputted by the rental car user and to output a map with its route guide to a printer, and the travel insurance reception apparatus 120 proposes to the user an insurance product suitable for the travel plan of the user in a convenient manner and also to make a contract for the proposed travel insurance.

Note that the CPU 121, the memory 122, the database 123, the communication interface 125 correspond to the CPU 21, the memory 22, the database 23, the communication device 25 in the travel insurance reception apparatus 20 according to the aforementioned first embodiment, respectively. Therefore, practically identical component parts are omitted with the description thereof.

A memory 122, similar to the memory 22 in the first embodiment, has various control programs, a system program as a computer and the like, being previously written therein. For example, the memory 122 in the travel insurance reception apparatus 120 has: an insurance order receiving program 122a; a proposed insurance select program 122c; a proposed insurance information output program 122d; a contract confirmation program 122e; an insurance contract information output program 122f; a route searching program 122g; and the like being previously written therein. These, except for the route searching program 122g, correspond to the insurance order receiving program 22a, the proposed insurance select program 22c, the proposed insurance information transmitting program 22d, the contract confirmation program 22e, and the insurance contract information transmitting program 22f in the travel insurance reception apparatus 20, respectively. The route searching program 122g is a program that searches, based on road map data stored in the database 123, the shortest route from a desired starting point to a destination by the appropriate algorithm.

The communication interface 125 is an interface device for data communication with such an output device as an input device (a pointing device such as a keyboard or a mouse, a card reader, or the like) 126, a display 127, a printer 128, or the like, each of which is connected to the outside of the travel insurance reception apparatus 120. For example, corresponds thereto is: a parallel interface being compliant with the specification of SCSI, GP-IB, or the like; a serial interface being compliant with the specification of RS232-C, RS422, USB, IEEE1394, or the like; or a cable/radio LAN interface such as 10BASE-T, 100BASE-T, and Bluetooth.

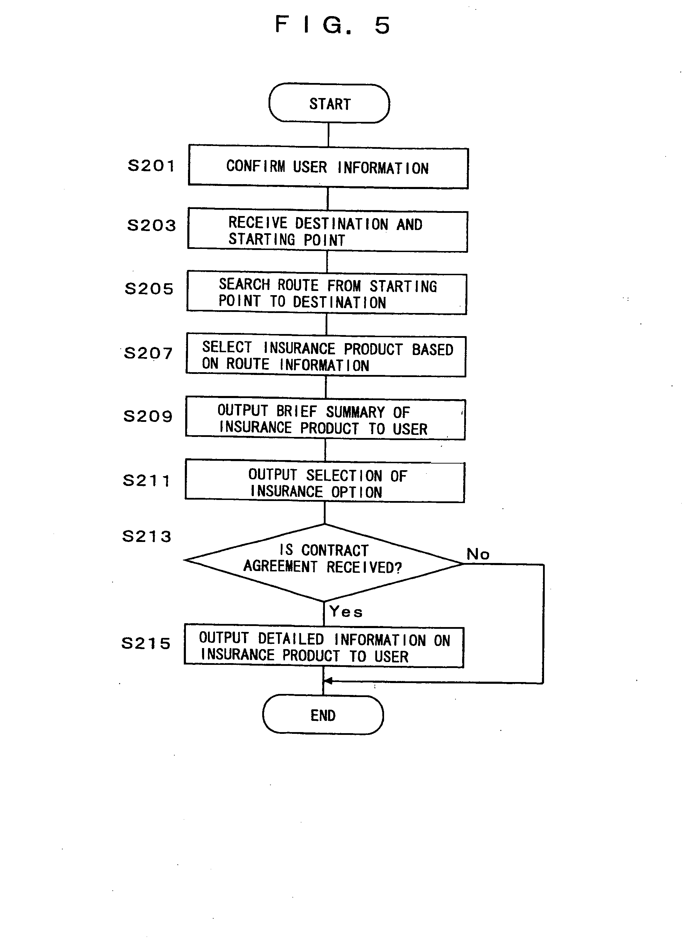

The thus-structured travel insurance reception apparatus 120 executes the travel insurance reception process, and its process flow are hereinafter described on FIG. 5. This travel insurance reception process is executed by the insurance order receiving program 122a, the proposed insurance select program 122c, the proposed insurance information output program 122d, the contract confirmation program 122e, the insurance contract information output program 122f, and the route searching program 122g, each of which is shown in FIG. 4.

As shown in FIG. 5, first, a process to confirm user information is handled in a step S201 after a predetermined initialization process. This process is handled by the contract confirmation program 122e stored in the memory 122, in which, for example, a driver's license, a credit card, or the like that belongs to the user is read out by the input device 126 such as the card reader, so that the user information can be obtained by the card reader, to thereby identify the user. It is also preferable to have such a structure that, together with the user confirmation in the step S201, car rental processes such as to select a desired rental car and to make a contract may also be handled by the travel insurance reception apparatus 120. This enables to handle a car rental procedure with the travel insurance reception process, so that it is also possible to realize an unattended rental car office.

When the user information is confirmed in the step S201, a process to receive a destination and a starting point is handled in the following step S203. This process is handled by the insurance order receiving program 122a stored in the memory 122, in which destination and starting point are received via the communication interface 125, the destination information and the starting point being inputted, for example, by the input device 126 such as the keyboard.

The following step S205 handles a process to search a route from the starting point to the destination. This process is executed by the route searching program 122g stored in the memory 122 to search, based on road map data stored in the database 123, the shortest route from the starting point to the destination, which has been inputted in the step S203, by the appropriate algorithm. The thus-searched route is outputted from the printer 128 as a guide map of the searched route. This map output is performed as service of the rental car shop.

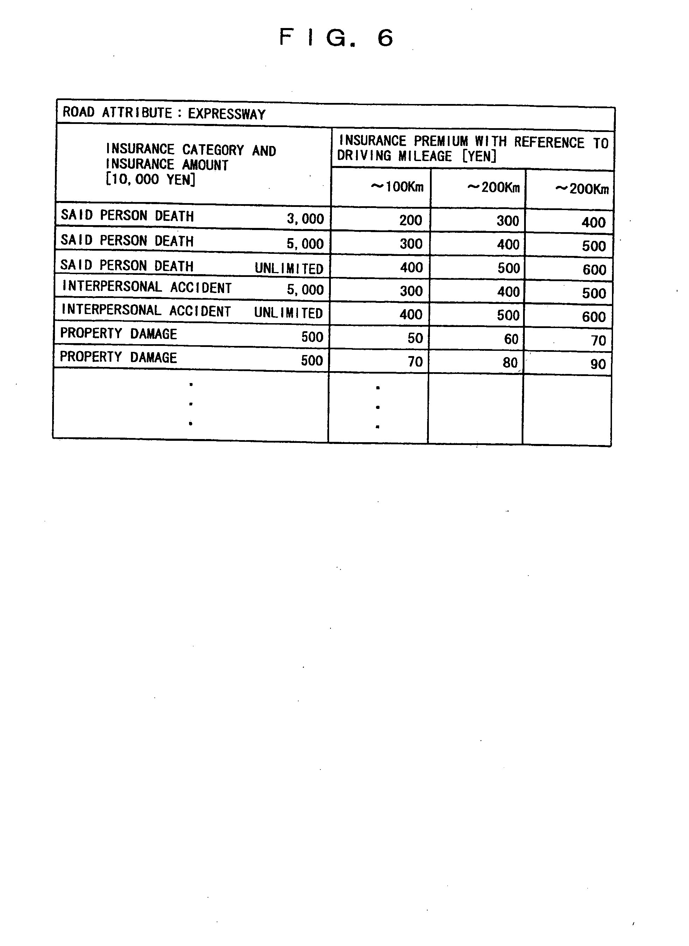

The following step S207 handles a process to select the insurance product based on route information searched in the step S205. This process is to retrieve insurance product information previously stored and prepared in the database 123 by the proposed insurance select program 122c, to thereby select the insurance product that corresponds with the retrieved route information. The insurance product is selected based on, for example, road attributes, such as type of road, added to the route information. For example, in the case where an expressway is included in the searched route, as shown in FIG. 6, the corresponding insurance product contents (said person death, interpersonal accident, property damage, or the like) are selected from database (database 123) that has an insurance premium with reference to the mileage of the expressway. Similar insurance database is prepared for open roads (non-expressway roads) as well.

The following step S209 handles a process to output on the display 127 a brief summary (first contents) of the insurance product that has been selected based on the route information. This process is handled by the proposed insurance information output program 122d stored in the memory 122, in which the brief summary is outputted on the display 127 via the communication interface 125.

Further, a step S211 handles a process to output insurance option selecting information on the display 127. This process is also handled by the proposed insurance information output program 122d, in which the selection information is outputted on the display 127 via the communication interface 125.

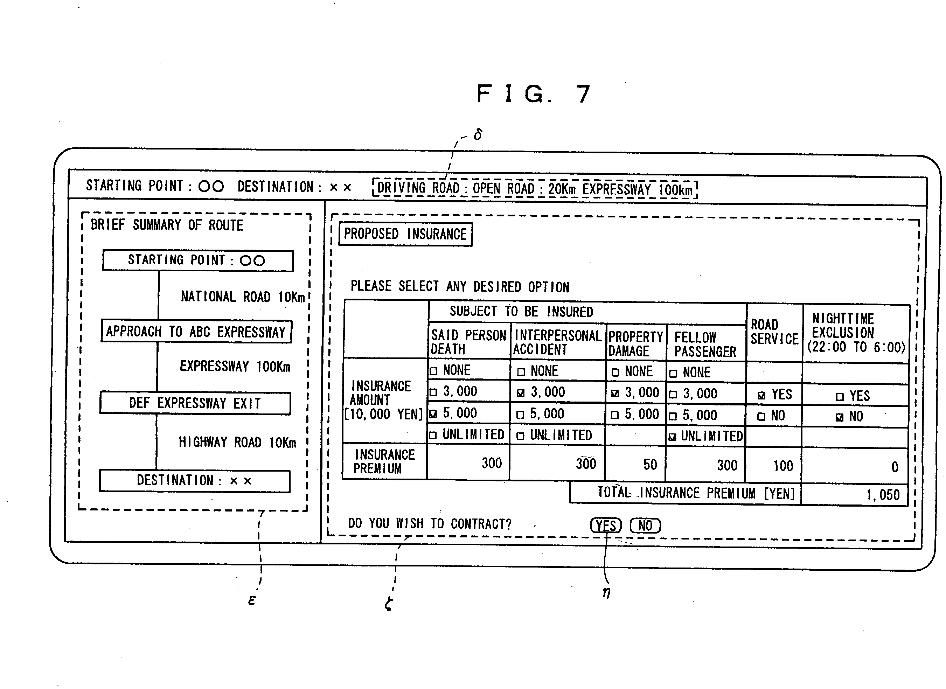

Thereby, for example, a screen image, as shown in FIG. 7, for proposing the travel insurance is displayed on the display 127. In an example of this screen image, as shown within a dashed frame δ, since the searched route includes the expressway besides the open road (20 km), the mileage of the expressway (100 km) is presented. In addition, a brief summary of the searched route is shown in a dashed frame ε. Further, in a dashed frame ζ, the insurance premium for each insurance amount of each insurance category (said person death, interpersonal accident, property damage, and the like) is shown with reference to the mileage of the expressway and the open road, as the insurance product to be proposed. In addition, as the insurance option, such as road service (charge-free allocation of a service car on a trouble such as vehicle breakdown or a blowout), nighttime exclusion (low premium option with no coverage for nighttime drive) are presented. The user can choice these options to arrange the insurance plan, and then consents thereto. In addition, the insurance premium can be set with reference to detailed particulars, in which the insurance premium is changed with reference to whether or not the searched route includes an accident-prone area. Specifically, it is possible to set the necessary and sufficient insurance plan according to the contents of the itinerary. Clicking on a contract button η shown in the drawing with a mouse or the like causes to transmit such notice (acceptance for contract) to the travel insurance reception apparatus 120 that the user wish to make a contract.

A step S213 handles a confirmation process whether to receive the contract agreement (acceptance/rejection) from the user or not. This process is handled by the contract confirmation program 122e via the communication interface 125, in which whether the insurance contract reaches consent or not is confirmed based on the data on acceptance or rejection responding to the proposed insurance product, the response data being transmitted from, for example, the input device 126 such as the keyboard or the mouse. Then, when the contract can be confirmed to reach consent (Yes in the S213), the following step S215 is executed, otherwise a series of the travel insurance reception processes are terminated since no approval of the insurance contract can be seen.

When the insurance approval notice from the user is received in the step S213, the following step S215 handles a process to transmit detailed information (second contents) on the insurance product to which the user has consented. This process is handled by the insurance contract information output program 122f via the communication interface 125, in which detailed data including, for example, a covenant and the like regarding the contracted insurance is outputted to the printer 128 and printed on a printer sheet. In the second embodiment, this printer sheet is used as a document of contract.

The travel insurance reception apparatus 120 according to the above-described second embodiment may be expressed in the following manner as a technical idea.

(1) The travel insurance reception apparatus 120 comprises: an input means for inputting the starting point and the destination of the user; a route searching means for searching a route from the starting point to the destination, based on the road map database in which road-network data is stored and the starting point and the destination inputted by the input means, with reference to the road map database; an insurance proposing means for proposing to the user the insurance product selected or generated based on the route searched by the route searching means; and an insurance contract confirming means for receiving, from the user, user's consent to the insurance contract for the insurance product proposed by the insurance proposing means and for outputting the contents of the insurance product.

Specifically, the starting point and the destination of the user are inputted by the input means, the route from the starting point to the destination is searched with reference to the road map database in which the road-network data is stored; and the insurance product that is selected or generated based on the searched route is proposed to the user by the insurance proposing means. In the second embodiment, the insurance product is generated depending on the type of road (expressway or non-expressway) among the searched route. Then, user's consent to the insurance contract for the proposed insurance product is received and the contents of the insurance product are outputted by the insurance contract confirming means.

Thereby, when the user inputs the starting point and the destination, the route from the starting point to the destination is searched and the insurance product relating to the searched route is proposed. Then, when the user consents to the insurance contract for the proposed insurance product, the contents of the insurance product are outputted. Therefore, this has the advantage as to propose to the user the insurance product suitable for the travel route in a convenient manner and to make a contract for the proposed insurance product.

(2) The insurance proposing means preferably generates the insurance product to be presented to the user, with reference to mileage of the route searched by the route searching means and/or attributes of roads on the searched route. Here, the "attributes of roads" are the information stored in the road map database, such as whether the road is an expressway or an open road (non-expressway road), the speed limit of the road, the number of lanes of the road, and the like. This further has the advantage as to conveniently propose to the user the insurance product suitable for the travel plan (travel route) and to make a contract for the proposed insurance product.

(3) The road map database further stores data on the road attributes of each road and/or data on past accidents occurred on each road, and the insurance proposing means preferably calculates, based on the road map database, the insurance premium of the insurance product with reference to the data on the past accidents occurred on the road of the searched route. This further has such effect as to propose to the user the insurance product suitable for the travel plan in a convenient manner and to make a contract.

In the above-described embodiment, such insurance is exemplified as the insurance product proposed to the user based on the destination and the starting point: that the insurance premium is determined with reference to the mileage from the starting point to the destination (that is, the longer the travel mileage is, the higher the probability of the accident becomes, so that a high insurance premium is set); and that the insurance premium is set with reference to whether roads included in the route to the destination comprise an expressway or not. The present invention, however, is not limited thereto, so that such insurance may be adoptable that the insurance premium is set with reference to geographical and spatial conditions and climate conditions relating to the destination and the starting point, this insurance including: insurance in which a route to be driven from the starting point to the destination is estimated to have different settings of the insurance premium with reference to the route conditions (width of street, distinction between paved/unpaved roads, the number of intersections on the route, the number of crossings on the route, and the like); and insurance having different settings of the insurance premium with reference to weather and a weather forecast at that time (in a case when a typhoon is predicted to pass through the route, in a case when a forecast predicts rain/snow/fog or the like in an area of the route, in a case when a high probability of the road becoming icy is expected due to low temperature, or the like).

In addition, it may be structured to have an expiration date of the insurance determined with reference to the starting point and the destination. For example, when the mileage is no more than a predetermined value (for example, 200 km), insurance valid for 24 hours is proposed, while when the mileage exceeds the predetermined value or when accommodations are selected as the destination, insurance valid for 48 hours is proposed. In the second embodiment, it is preferable to propose insurance valid for the same period as a vehicle rental period.

It is further preferable, in data communication between the navigation device or the personal digital assistant and the travel insurance reception apparatus (information center), to record contract-approved time in the detailed information of the insurance contract (the second contents described in claim 2), which has been transmitted from the insurance reception apparatus, at the time of insurance contract approval. Specifically, in a case of setting a valid period of the insurance as described above, it is required to set the starting date and time of its valid period. When the starting date and time are recorded in the aforementioned detailed information, the starting date and time of the insurance valid period can be clarified. Especially when the navigation device is used, it is preferable to use a time keeping function held in a GPS sensor mounted in the navigation device in an effective manner. This means that it is structured that clocking by the time keeping function held in the GPS sensor is added to the detailed information of the insurance contract as the starting date and time of the insurance valid period. This time keeping function calculates time based on a signal from a satellite, so that it is very accurate, and since the time is kept by a person other than the person concerned, who concludes the insurance, the time can be effectively used as effective in terms of contract.

## Claims

1. A travel insurance reception apparatus including a communication device which transmits/receives data to/from an external device, the travel insurance reception apparatus, comprising:
a travel information receiving means for receiving data on destination and starting point from the external device via the communication device;
an insurance product proposing means for transmitting one or more insurance products based on the destination and the starting point which have been received by said travel information receiving means to the external device via the communication device; and
an accept/reject data receiving means for receiving data on accepting or rejecting the insurance products transmitted by said insurance product proposing means.

2. A travel insurance reception apparatus including a communication device which transmits/receives data to/from an external device, the travel insurance reception apparatus, comprising:
a travel information receiving means for receiving data on destination and starting point from the external device via the communication device;
an insurance product select means for selecting one or more insurance products, based on a prescribed condition, when a mileage from the starting point to the destination exceeds a predetermined value;
an insurance product proposing means for transmitting to the external device via the communication device first contents regarding the selected insurance products;
an accept/reject data receiving means for receiving data on accepting/rejecting one of the insurance products represented by the first contents transmitted by said insurance product proposing means; and
an approved contract notifying means for, when said accept/reject data receiving means have received the data on accepting one of the insurance products, notifying approval of a contract of the accepted insurance product and transmitting second contents regarding the accepted insurance product to the external device via the communication device.

3. The apparatus according to claim 1 or 2, wherein said travel information receiving means further receives data on a current position of the external device.

4. The apparatus according to claim 1, 2 or 3, wherein the starting point is a current position of the externai device.

5. The apparatus according to claim 2, 3 or 4, wherein the prescribed condition is the mileage between the destination and the starting point, or a condition with reference to the destination.

6. The apparatus according to claim 2, 3, 4 or 5, wherein the first contents regarding the insurance product are a brief summary thereof and the second contents regarding the insurance product are detailed particulars thereof.

7. The apparatus according to claim 2, 3, 4, 5 or 6, further comprising an insurance premium collecting means for, when said accept/reject data receiving means have received the data on accepting one of the insurance products, collecting an insurance premium of the accepted insurance product from a user of the external device who accepts the one of the insurance product.

8. The apparatus according to any one of claims 1 to 7, wherein the external device is a navigation device mounted on a vehicle.

9. The apparatus according to claim 1 to 7, wherein the external device is a personal digital assistant.

10. A travel insurance reception apparatus including a communication device which transmits/receives data to/from an external device, the travel insurance reception apparatus, comprising:
a travel information receiving means for receiving data on destination from the external device via the communication device; and
an insurance product proposing means for transmitting one or more insurance products to the external device via the communication device based on the destination.

11. The apparatus according to claim 10, wherein the insurance product is determined with reference to category of the destination.

12. A computer-implemented method for travel insurance reception from an external device, the method comprising the steps of:
electrically receiving data on destination from the external device;
selecting one or more insurance products with reference to category of the destination; and
electrically transmitting the selected insurance products to the external device.
